**Europäisches Patentamt**

**European Patent Office**

**Office européen des brevets**

(11) Veröffentlichungsnummer: **0 147 546**
**B1**

(12) **EUROPÄISCHE PATENTSCHRIFT**

(45) Veröffentlichungstag der Patentschrift:
**16.03.88**

(21) Anmeldenummer: **84112164.3**

(22) Anmeldetag: **11.10.84**

(51) Int. Cl.⁴: **C 03 C 8/10**, C 03 C 3/072,
C 03 C 3/108, C 03 C 3/102

(54) **Blau lumineszierende Gläser.**

(30) Priorität: **23.12.83 DE 3346685**

(43) Veröffentlichungstag der Anmeldung:
**10.07.85 Patentblatt 85/28**

(45) Bekanntmachung des Hinweises auf die Patenterteilung:
**16.03.88 Patentblatt 88/11**

(84) Benannte Vertragsstaaten:
**AT BE CH DE FR GB IT LI NL**

(56) Entgegenhaltungen:
**DE-C-636 630**
**DE-C-636 747**
**DE-C-716 044**
**FR-A-2 294 139**
**US-A-2 049 765**
**US-A-3 258 351**

**SPRECHSAAL FÜR KERAMIK, GLAS, EMAIL,
SILIKATE, Nr. 19, 1. Oktober 1972, Seiten 803-806,
Billigheim über Mosbach, DE; Dr. H. FISCHER:
"Über Lumineszenzgläser"**

(73) Patentinhaber: **Degussa Aktiengesellschaft,
Weissfrauenstrasse 9, D-6000 Frankfurt am Main
1 (DE)**

(72) Erfinder: **Kiss, Akos, Dr. Dipl.- Chem.,
Keplerstrasse 69, D-8750 Aschaffenburg (DE)**
Erfinder: **Kleinschmit, Peter, Dr. Dipl.- Chem.,
Wildaustrasse 19, D-6450 Hanau (DE)**
Erfinder: **Völker, Werner, Dr. Dipl.- Chem., Auf
dem Niederberg 45, D-6368 Bad Vilbel (DE)**
Erfinder: **Halbritter, Günter, Dipl.- Ing.,
Rhönstrasse 6, D-8752 Schöllkrippen (DE)**

## Beschreibung

Die Erfindung betrifft blau lumineszierende Gläser, insbesondere blau lumineszierende Glasfritten zum Glasieren von keramischen Produkten.

Luminophore bzw. Leuchtstoffe sind Substanzen, die befähigt sind, nach Energieabsorption (Tageslicht, Ultraviolett-, Röntgenstrahlung u.a.) Licht auszustrahlen. Diese Lichtausstrahlung erfolgt mit grösserer Wellenlänge als die absorbierte Strahlung besitzt und geschieht während der Erregung selbst und in verschieden langen Zeiträumen danach.

Nach herrschender Meinung handelt es sich bei den Leuchtstoffen um feste, kristalline Verbindungen, in denen einige Kationen des Grundmaterials durch fremde Kationen ersetzt sind, wobei man die eingebauten Kationen mit der umgebenden Schar von Anionen als sogenannte Leuchtzentren auffasst. Durch Zerkleinern der Leuchtstoffkristallite wird die Leuchtfähigkeit bei den bekannten Luminophoren völlig zerstört.

Aus den DE-PSen 636 747 und 636 630 sind lumineszierende Gläser für Leuchtröhren bekannt, die als lumineszierende Aktivatoren Blei in Verbindung mit Magnesiumoxid bzw. Calciumsilikat als Phosphorträger enthalten. Diese Gläser lumineszieren in einer Rosafarbe. Als Glasfritten zum Glasieren keramischer Produkte sind diese Gläser nicht anwendbar.

Zur Herstellung von z. B. Fliesen mit lumineszierenden Glasurüberzügen hat man bisher Mischungen aus kristallinen Leuchtstoffen und üblichen Glasfritten aufgebrannt. Dabei durften allerdings Brenntemperaturen von 700 bis 800° C nicht überschritten werden, da bei höheren Temperaturen, die zum Aufbrennen interessanter Glasfritten notwendig sind, die Leuchtstoffe zerstört werden und keine Leuchtstoffeigenschaften mehr aufweisen.

Es war daher Aufgabe der vorliegenden Erfindung, blau lumineszierende Gläser, insbesondere blau lumineszierende Glasfritten zum Glasieren von keramischen Produkten zu entwickeln.

Diese Aufgabe wurde erfindungsgemäß durch Gläser mit folgender Zusammensetzung gelöst:

2 bis 15 Mol % Natriumoxid und/oder Kaliumoxid

71 bis 82 Mol % Siliziumdioxid

7 bis 12 Mol % Boroxid

1 bis 3 Mol % Aluminiumoxid

0,8 bis 1,8 Mol % Bleioxid

Diese Gläser absorbieren die Quecksilberlinie von 254 nm und emittieren eine Bande im blauen Bereich mit dem Bandenmaximum bei 420 nm ga ($\Delta\lambda = \pm 2nm$) und einer Halbwertsbreite der Bande von ungefähr 35 nm.

Die lumineszierenden Gläser bzw. Fritten sind temperaturstabil, säurebeständig, verlieren beim Zerkleinern nicht ihre Leuchtstoffeigenschaften, sind transparent und farblos bei Tageslicht. Außerdem können sie eingefärbt werden.

Die Herstellung der erfindungsgemäßen Gläser erfolgt durch Zusammenschmelzen der Bestandteile bzw. entsprechender Rohprodukte (z. B. Kaolin, Feldspat, Kieselsäure) bei Temperaturen von 1300 bis 1450° C in geeigneten Öfen (Gasofen, Drehofen, Elektroschmelzwanne) während 0,5 bis 5 Stunden. Zur Herstellung von Glasfritten wird in Wasser abgeschreckt.

Durch Variation der Alkalioxide und deren Gehalte läßt sich der Farbton der Lumineszenz in geringem Umfang variieren.

## Patentanspruch

1. Blau lumineszierende Gläser, insbesondere blau lumineszierende Glasfritten zum Glasieren von keramischen Produkten, gekennzeichnet durch folgende Zusammensetzung:

2 bis 15 Mol % Natriumoxid und/oder Kaliumoxid

71 bis 82 Mol % Siliziumdioxid

7 bis 12 Mol % Boroxid

1 bis 3 Mol % Aluminiumoxid

0,8 bis 1,8 Mol % Bleioxid.

## Claim

1. Blue luminescent glazes, in particular blue luminescent glass frits for the glazing of ceramic products, characterised by the following composition:

from 2 to 15 mol % of sodium oxide and/or potassium oxide

from 71 to 82 mol % of silicon dioxide

from 7 to 12 mol % of boron oxide

from 1 to 3 mol % of aluminium oxide

from 0.8 to 1.8 mol % of lead oxide.

**0 147 546**

## Revendication

Verres luminescents bleus, en particulier verres frittés luminescents bleus pour la glaçure de produits céramiques, caractérisés par la composition suivante:

2 à 15 % en mole d'oxyde de sodium et/ou d'oxyde de potassium

71 à 82 % en mole de bioxyde de silicium

7 à 12 % en mole d'oxyde de bore

1 à 3 % en mole d'oxyde d'aluminium

0,8 à 1,8 % en mole d'oxyde de plomb.